# EUROPEAN PATENT SPECIFICATION

(11) **EP 2 320 131 B1**
(45) Date of publication and mention of the grant of the patent: **04.11.2015**
(21) Application number: 10190517.2
(22) Date of filing: 09.11.2010
(51) Int. Cl.: F21V 11/18, B64F 1/20, F21S 8/08, F21V 5/04, F21V 7/00, F21W 111/02, F21W 111/04, F21W 111/06, F21Y 101/02

(54) **Luminous signaling device**
Leuchtende Signalisierungsvorrichtung
Dispositif de signalisation lumineuse

(30) Priority: 10.11.2009 IT UD20090195
(43) Date of publication of application: 11.05.2011
(73) Proprietor: Mizza Renato Di Balzarotti Ambrogio, 33017 Tarcento (UD) (IT)
(72) Inventor: Balzarotti, Ambrogio, 33010 Lusevera (UD) (IT)
(74) Representative: Petraz, Gilberto Luigi

(56) References cited:
- EP-A2- 0 328 265
- WO-A1-2006/070050
- FR-A3- 2 592 133
- US-A- 2 387 816
- US-A- 3 005 975
- US-A- 5 072 352

## Description

### FIELD OF THE INVENTION

The present invention concerns a luminous signaling device which can be used, preferably, but not only, to light or signal obstructions or other, of the permanent or temporary type, for example in the field of means of transport for things or persons.

In particular the luminous signaling device according to the invention can be used, for example, in the aeronautical field to signal to aircraft the presence of obstacles, for example the tops of skyscrapers, antennae or other, or in the nautical field or on land to signal quays, piers or obstacles to maritime navigation, or in the field of ground transport to signal road obstacles, railings or barriers etc., or as an aid to signal access roads to building sites, factories or other.

### BACKGROUND OF THE INVENTION

Luminous signaling devices are known, used to indicate the presence of very high obstacles for aircraft, such as buildings, skyscrapers, factory chimneys, telecommunication towers, wind energy plants, off-shore plants, piers of bridges, or to signal airport runways or heliport pads from a distance, or in the nautical or ground transport fields to signal obstacles or as an aid to signal access to building sites, factories or other.

Known signaling devices are provided with at least a light source, which emits colored light suitable for the type of signaling desired, for example white, red, green, yellow etc. Known signaling devices are conformed according to a substantially radial or cylindrical geometry, so that the light is emitted laterally in a uniform manner in every angular direction.

One disadvantage of these known devices is that, once installed, for example at intermediate heights on the walls of a skyscraper, a fraction of the overall light emitted by the light source is radiated uselessly toward the building itself, thus determining an inefficient use of the device. This can also cause undesired light pollution phenomena, for example in the case where the light emitted toward the building is directed toward windows, or dazzle phenomena, for example toward users or personnel working on maintenance.

These problems may also occur in the case where the known devices are used, for example, for signaling road obstructions, for example a gate, or road-works. In this case the light is emitted by the device both in the desired direction to be illuminated or to indicate the obstruction, for example in the direction of the obstructed route, and also in other undesired directions, such as for example in the opposite direction, which could be dangerous for normal traffic flow.

A beacon is known from the document WO-A-2006/070050 formed by concentric, opaque, and cylindrical walls inside which a LED type light source is disposed. Through windows are made in the opaque walls which allow the passage of a desired quantity of light emitted by the LED, but the LED is not protected from the outside environment. The position and the number of the cylindrical walls can be adjusted, thus allowing to vary the width and the direction of the windows. A variant of this beacon is of the type with superimposed levels, associated with different colors of the light emitted from the relative windows. In order to vary the configuration of the windows of the beacon, it is necessary to intervene manually, paying great attention to the precise superimposition of the various levels, in order to avoid uncoupling, thus lengthening the assembly times.

A lamp of a parallelepiped shape is known from the document US-A-2,656,452, defined by an upper and a lower wall connected by four vertical uprights at the corners, inside which two lamps are disposed, one on top of the other. Each of the sides of the parallelepiped has a screen, sliding vertically between a raised position and a lowered position; during the passage from one position to the other the screen determines the cooperation with a switch which activates the lamp which is exposed on each occasion. The presence of the vertical uprights does not allow a uniform distribution at 360° of the light, irrespective of the position of the sliding screen. Moreover, in this case too, the lamps are not protected from the outside environment.

The document UA-A-3,005,975 shows a signaling, emergency and security stop lamp, which is formed by a cylinder disposed at a central horizontal axis, inside which a light source is provided which emits light along said central axis. A front wall of the cylinder is transparent and is associated with blade elements rotating on a plane parallel to that of the front wall and pivoted around the central axis, so that the lamp can emit a colored light which is periodically interrupted. This known lamp too, because of its construction geometry, is not suitable for a uniform 360° emission of light.

The document FR-A-2.592.133 shows a luminous signaling device for motor vehicles formed by a substantially cylindrical base and made of transparent material, inside which a continuous or intermittent light source is housed. The lateral wall of the base is shaped to produce a plurality of Fresnel lenses and has a window for the emission of light to the outside. Around the base a fixed screen is disposed, attached to the upper wall of the base. The fixed screen comprises a portion of movable screen which can be rotated manually to obstruct at least part of the window, so as to vary the illumination capacity of the known signaling device, so that it can be used, for example, as a travel light or a light to signal danger or a security light. This device, as well as not protecting the light source from the outside environment, is not easy for the user, inasmuch as the coupling made between the base and the screen does not allow an easy movement of the portion of the mobile screen, with the risk of involuntarily uncoupling the two components.

The document FR-A-0.328.265 describes an illumination device having an external cylindrical shell with an oblong window and an inside shell with an aperture inside which two light sources are provided, disposed on an oblong bar, which emit univocally in one direction. The rotation of the internal shell with respect to the external shell, obtained by rotating a lower base flange of the internal shell, determines the form of the area illuminated by the light sources and visible from the external window. This known device too, as well as not allowing a comfortable rotation and not protecting the light sources from the external environment, does not allow a uniform illumination at 360°, because of its geometric conformation and disposition of the light sources.

The document US-A-5,072,352 describes an auxiliary lamp having a handle which supports a power source for a lamp, an upper support wall provided with a hook to hang the lamp, a base wall, bars which connect the base wall to the upper wall, a screen of partial darkening pivoted by means of a screw to the upper support wall and therefore to the hook, and a protection cage to cover the part of the lamp not darkened. In this lamp, as well as there not being a good protection of the light sources with respect to the external environment, the luminous emission is not at 360°, in that it is obscured by the protection cage and the bars and, moreover, the rotation of the partial darkening screen is not easy for the user, as it is directly associated with the hook which guarantees the stability of the lamp itself.

Purpose of the present invention is to make a luminous signaling device which, once installed, allows to emit light in an efficient way in one or more directions, selected and/or selectable, preventing unwanted light pollution phenomena and/or dazzling, resolving the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a luminous signaling device according to the present invention comprises:
- a box-like containing body, inside which at least a light source is housed, able to emit light uniformly in every direction at 360° around a central axis of the box-like body, the box-like body being provided with an upper cover, a lower cover and an emission window interposed between the upper cover and the lower cover,
- shutter means associated with the emission window to define one or more darkening directions, in which at least part of the light emitted by the light source is intercepted.

According to a characteristic feature of the present invention, the emission window is formed by a substantially cylindrical tubular body and made of a transparent material that develops around the central axis completely surrounding the light source, thus functioning as a containing and protecting element for the light source, separating it from the outside environment, and as a light directing lens for the light emitted.

Furthermore, according to the present invention, the shutter means are configured according to an arc of a circle defined at least partly by a part of the lateral surface of a cylinder that extends for a fraction of the circumference of the box-like body containing the light source.

The shutter means are coaxially disposed outside the emission window and are selectively mobile with respect to it, being able to rotate by 360° around said central axis so as to define one or more darkening directions.

According to the present invention, the upper cover and the lower cover, in a disposition concentric to the central axis, have first radially internal grooves and second radially external grooves, which have a circular shape mating respectively with the diameter of the emission window and the shutter means. The emission window is inserted in the first grooves and the shutter means are inserted in the second grooves and slidingly guided in rotation with respect to the emission window, so as to be able to rotate selectively by 360° around the central axis of the box-like body.

In this way, when the signaling device is installed in the positioning seating desired, for example on a wall of a building at the desired height, or during normal functioning, it is possible to position or move the shutter means simply and quickly with respect to the emission window. This therefore allows to effectively prevent the emission of the light emitted by the light source in the desired darkening direction, for example toward the wall of the building or toward a road with normal traffic, preventing unwanted light pollution and/or dazzling phenomena.

According to an advantageous solution, the light source comprises a plurality of LED type luminous elements.

The geometric shape of the shutter means allows them to be rotated around the box-like containing body, thus modifying the darkened portion of the signaling device.

The present invention also includes the variant that provides clamping means associated with the box-like containing body in order to stably clamp the shutter means in a desired darkening position.

In some forms of embodiment of this variant, the clamping means comprise a releasable attachment portion provided in an aligned position along the central axis, on a support structure of the light source and a relative seating cooperating with the attachment portion provided in a mating position on the upper cover.

According to a variant of the invention, the shutter means comprise a reflecting portion able to at least partly recover the light emitted in the darkening directions so as to reflect it toward an effectively useful emission direction.

In this way, part of the light intercepted by the shutter means is reflected toward the desired emission direction or directions, contributing to increase the efficiency of the light emission of the signaling device, and therefore reducing the costs of its use.

According to another variant of the invention, the shutter means comprise, at least on part of their external surface, a retro-reflective portion able to at least partly reflect the incident light striking the signaling device from outside from a direction coinciding with the darkening direction. Therefore, in this way it is also possible to identify the signaling device, for example when it is used to signal obstructions in a roadway or to signal the position on a wharf in a dock in order to identify the correct mooring point.

It comes within the spirit of the present invention to provide several shutter means mobile selectively and independently of each other, so as to define corresponding and distinct darkening directions of the same emission source.

According to another variant, the shutter means are associated with different light sources of the signaling device, which can be activated independently from each other, so as to define an equal number of different darkening directions for each light source.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1A is a schematic lateral view of a luminous signaling device according to the present invention in a first operating condition;
- fig. 1B is a schematic view from above of the device in fig. 1A;
- fig. 2A is a schematic lateral view of the signaling device according to the present invention in a second operating condition;
- fig. 2B is a schematic view from above of fig. 2A;
- fig. 3A is a schematic lateral view of the signaling device according to the present invention in a third operating condition;
- fig. 3B is a schematic view from above of fig. 3A;
- fig. 4 is a schematic lateral view of a variant of the device in figs. 1A-3A; and
- fig. 5 is a schematic view from above of fig. 4.

To facilitate comprehension, the same reference numbers have been used, where possible, to identify common elements that are identical in the drawings. It is understood that elements and characteristics of one form of embodiment can conveniently be incorporated in other forms of embodiment without any further clarifications.

### DETAILED DESCRIPTION OF A PREFERENTIAL FORM OF EMBODIMENT

With reference to the attached drawings, a luminous signaling device 10 according to the present invention comprises a box-like containing body provided with an upper cover 12, a lower cover 14, and an interposed emission portion or window 20, all disposed along a common central axis X, so as to define a containing seating. The device 10 comprises a source of luminous emission, or bulb 25, disposed inside the containing seating, suitable to emit light uniformly at 360° around the central axis X, and a shutter 30 associated with the emission window 20, in particular disposed outside it.

The upper cover 12 and lower cover 14 are made of a material resistant both to high and to low temperatures, such as for example polytetrafluoroethylene (PTFE) which guarantees wide ranges of working temperature and allows the production of surfaces with a low friction coefficient in order to prevent powders or atmospheric agents, such as snow or other, from being deposited and remaining thereon.

The upper cover 12 and the lower cover 14 have a substantially circular geometric shape having the same base diameter. In particular the upper cover 12 has a regular conical shape, flat and solid, and is provided in its lower portion with a seating 13, for example threaded, which develops axially from its base surface along part of its height. The seating 13 is suitable for the insertion of a mating portion of the bulb 25 which also has a clamping function for the shutter 30, as will be described more fully hereafter.

The lower cover 14 has a flat, truncated/conical shape, disposed with the base surface toward the top and is provided with a first axial hole 15 made through between its lateral surface and the base surface. The hole 15 allows the stable insertion of a second portion or base 26 of the bulb 25.

Each cover 12, 14 is also provided with two circular grooves, respectively first grooves 16a, 16b and second grooves 17a, 17b which develop peripherally on the respective base surfaces. In particular, the first groove 16a of the lower cover 14 is concentric and radially inside the second groove 17a of the cover 14 and the first groove 16b of the upper cover 12 is concentric and radially inside the second groove 17b of the upper cover 12. The grooves 16a, 16b also have the same diameter, as do the grooves 17a, 17b. The grooves 16a, 16b, 17a and 17b also have a regular and square transverse profile, mating respectively with the shape of the emission window 20 and the shutter 30, to allow insertion as will be described in more detail hereafter.

The emission portion or window 20, has a cylindrical tubular shape, with an axial development along the central axis X and has a diameter equal to the diameter of the first grooves 16a, 16b; it is made of transparent plastic material, for example polycarbonate or other similar material which can be colored or neutral, and is suitable to function as a containing and protection element for the bulb 25, separating it from the external environment, and as a light directing lens for the light emitted by it.

The emission window 20 has a transverse thickness that is slightly less than the width of the first grooves 16a, 16b, so as to allow its lower and upper circular ends to be inserted into the grooves 16a and 16b. Advantageously, a sealing element can be provided to be inserted into the grooves 16a, 16b, for example a rubber packing, so as to achieve a sealed containing seating.

The bulb 25, or light emission source, comprises a plurality of LED type luminous elements 25a, disposed regularly and uniformly in linear strips wound around a cylindrical support, not shown in the drawings, coaxial with the covers 12 and 14. This distribution, of a known type, allows great light emission efficiency, and in any case allows to maintain an adequate level of emission even in the event of malfunction of an individual LED element 25a.

The bulb 25 comprises an upper portion 27 that develops along the central axis X, associated with the cylindrical support of the LED elements 25a as described above, which is provided with a releasable attachment portion, for example threaded, able to be screwed into the seating 13 of the upper cover 12, or configured for bayonet coupling, or other releasable type, with the seating 13. The bulb 25 is also provided with a base 26, tubular in shape, connected to the cylindrical support and suitable to house the connections, electric cables to feed the bulb 25 or other auxiliary circuits, such as for example timer circuits or programming circuits or a buffer battery to guarantee the correct functioning of the device 10 even in conditions when the supply of electric energy is temporarily interrupted.

The shutter 30, made of opaque plastic material able to block the emission of light, for example made of polytetrafluoroethylene, has a regular shape, with a geometry like the arc of a circle concentric to the central axis X, in this case semi-cylindrical, such as to allow it to rotate around the central axis X with respect to the emission window 20. The shutter 30 also has a height substantially identical to that of the corresponding emission window 20 and a transverse thickness slightly less than the width of the second grooves 17a, 17b respectively of the upper cover 12 and the lower cover 14, to allow its lower and upper semicircular ends to be inserted.

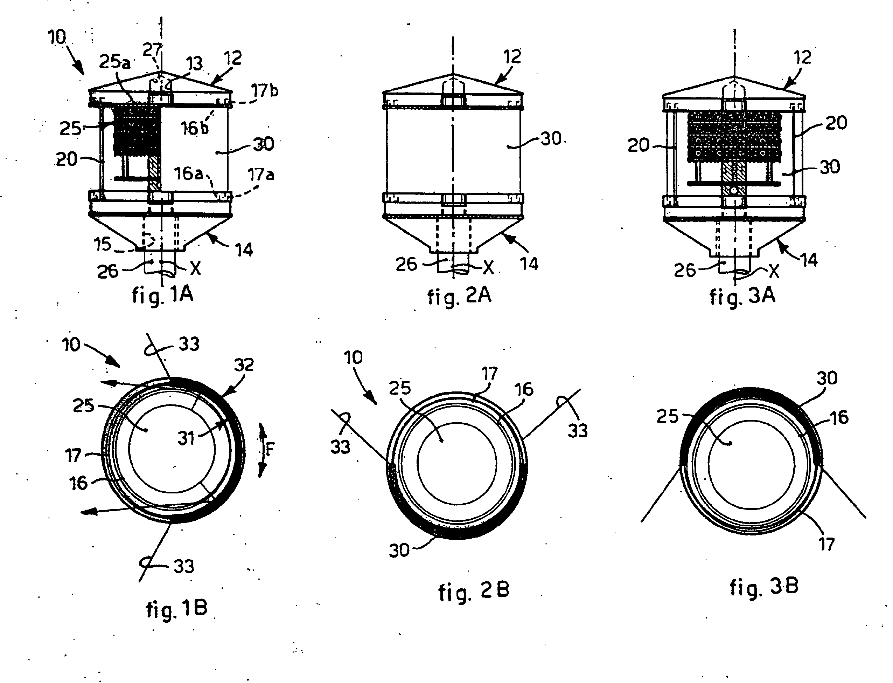

The shutter 30 is mobile with respect to the box-like body defined by the covers 12, 14 and the emission window 20, and can slide, as indicated by the arrow F (fig. 1B) in the grooves 17a, 17b and therefore rotate by 360° with respect to the bulb 25. This allows to define one or more darkening directions, as will be described in more detail hereafter, in which the light emitted by the bulb 25 is intercepted by the inner surface of the shutter 30.

An inner surface of the shutter 30, facing toward the bulb 25, is provided with a reflecting portion 31 able to reflect the light emitted by the LED elements 25a and to direct it substantially in a single direction of emission, so as to recover, at least partly, the light emitted in the direction of the shutter 30.

Advantageously an external surface of the shutter 30 is provided with a retro-reflective portion 32, such as for example a reflecting adhesive film, so as to identify the signaling device 10 from a direction substantially coinciding with the darkening direction.

By screwing the upper portion 27 into the seating 13 it is also possible to clamp the emission window 20 and the shutter between the upper cover 12 and the lower cover 14, defining, according to the present invention, a clamped position thereof in a desired darkening position.

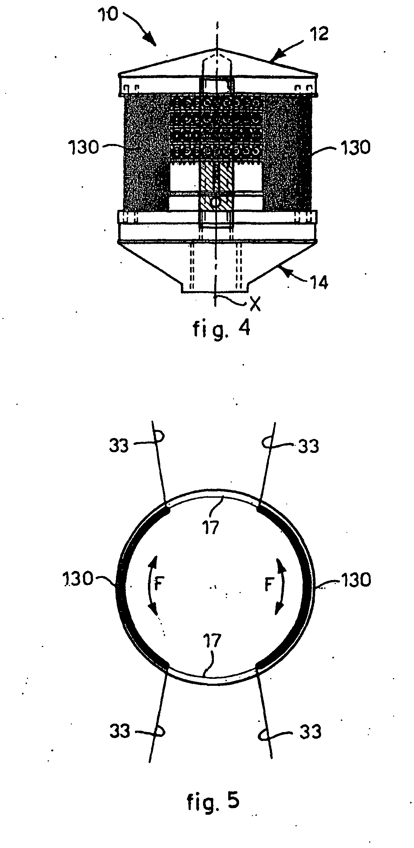

According to a variant shown in figs. 4 and 5, the signaling device 10 comprises two shutters 130, mobile independently of each other in the corresponding grooves 17a, 17b of the covers 12, 14, so as to define two darkening directions in which the light emitted by the bulb 25 is substantially intercepted to be absorbed and/or reflected by the corresponding inner surfaces.

The material used to make the base 26 is for example a plastic polymer material such as PVC, whereas the covers 12, 14 could be made of a material resistant both to high and to low temperatures, such as for example polytetrafluoroethylene (PTFE). Alternative materials for the base 26 and possibly also the covers 12, 14 can be chosen from among nylon, Teflon, aluminum or steel.

The luminous signaling device 10 as described heretofore functions as follows.

When the luminous signaling device 10 has been installed, for example by attaching its base 26 to a bracket or other assembly element on the wall of a building, the shutter 30 is rotated, sliding it in the grooves 17a, 17b in a clockwise or anti-clockwise direction as indicated by the arrow "F" into a desired and predetermined position, as shown in figs. 1A to 3B, for example positioning the shutter 30 with its external surface facing the wall of the building. In this way, by moving the shutter 30 into the desired position, it is possible to intercept the light emitted by the LED elements 25a facing toward the shutter 30, therefore defining a direction in which the light emitted is substantially darkened, that is, toward the wall, and a direction in which a larger quantity of light is emitted, identified by respective limit directions generated by vertical portions of the shutter 30.

According to the variant shown in figs. 4 and 5, the shutters 130 can be moved, sliding in the second grooves 17a, 17b independently from each other, defining an equal number of darkening directions, in the case shown here, substantially opposite each other.

It comes within the field of the present invention to provide that that device 10 is provided with a motorized member able to move the shutter 30, for example based on a remote control or other specific requirements, or that the device 10 is also provided with an electric feed source using solar panels.

It also comes within the field of the present invention to provide that the shutter 30 has a partly cylindrical shape with lateral portions inclined with respect to the circular base portions, so as to obtain a gradual and progressive darkening along its circular geometry.

## Claims

1. Luminous signaling device comprising:
- a box-like containing body, which houses at least a light source, or bulb, (25) suitable to emit light uniformly in every direction at 360° around a central axis (X) of the box-like body, said box-like body being provided with an upper cover (12), a lower cover (14) and an emission window (20) interposed between said upper cover (12) and said lower cover (14),
- shutter means (30, 130) associated to the emission window (20) in order to define one or more darkening directions, in which at least part of the light emitted by the light source, or bulb, (25) is intercepted;
**characterized in that** said emission window (20) is formed by a substantially cylindrical tubular body and made in transparent material which develops around said central axis (X) completely surrounding the light source, or bulb, (25) functioning as a containing and protection element for the light source, or bulb, (25), separating it from the external environment, and as a light directing lens for the light emitted by the light source, or bulb, (25), **and in that** said shutter means (30, 130) are configured according to a geometry of an arc of a circle, defined at least partially by a part of a lateral surface of a cylinder which extends for a fraction of the circumference of the box-like body containing the light source, or bulb, (25), the shutter means (30, 130) being clamped between the upper cover (12) and the lower cover (14) and coaxially disposed externally to the emission window (20), said shutter means (30, 130) being selectively movable with respect to said emission window (20), to rotate at 360° around said central axis (X) so as to define said one or more darkening directions, said upper cover (12) and said lower cover (14) having, according to a concentric disposition with respect to the central axis (X), upper and lower first grooves (16a, 16b) radially internal and upper and lower second grooves (17a, 17b) radially external, which have a circular shape mating respectively with the diameter of the emission window (20) and with the shutter means (30, 130), said emission window (20) being inserted in said upper and lower first grooves (16a, 16b) and said shutter means (30, 130) being inserted in said upper and lorwer second grooves (17a, 17b), between said upper cover (12) and the lower cover (14), and slidingly guided in rotation, with respect to the emission window (20), in order to selectively rotate at 360° around the central axis (X).

2. Device as in claim 1, **characterized in that** said upper and lower first grooves provide opposite grooves (16a, 16b) made respectively on the lower cover (14) and the upper cover (12), and said upper and lower second grooves provide opposite grooves (17a, 17b) made respectively on the lower cover (14) and the upper cover (12), in a position radially external to the first grooves (16a, 16b).

3. Device as in claim 1 or 2, **characterized in that** it comprises clamping means (13, 27) associated with the box-like containing body, to stably clamp the shutter means (30, 130) between the upper cover (12) and the lower cover (14) in a desired darkening position.

4. Device as in any claim hereinbefore, **characterized in that** said lower cover (14) is provided with a hole (15) for insertion of a tubular shaped base (26) connected to a cylindrical support of the light source, or bulb, (25) comprising a plurality of LED type luminous elements (25a), disposed regularly and uniformly in linear strips wound around said cylindrical support, coaxial with the upper cover (12) and lower cover (14).

5. Device as in claims 3 and 4, **characterized in that** said clamping means comprise a releasable attachment upper portion (27), provided in a position aligned along the central axis (X), on said cylindrical support structure of the light source, or bulb, (25) and a relative cooperation seating (13) with the upper portion (27) provided, in a mating position, on the upper cover (12).

6. Device as in any claim hereinbefore, **characterized in that** the shutter means (30, 130) has a height identical to that of the corresponding emission window (20).

7. Device as in any claim hereinbefore, **characterized in that** it comprises several of said shutter means (130) selectively movable independently with respect to each other so as to define a corresponding number of darkening directions of the light source, or bulb, (25).

8. Device as in any claim hereinbefore, **characterized in that** the shutter means (30, 130) comprise, at least on part of their internal surface, facing toward said light source, or bulb, (25), a reflecting portion (31) able to recover, at least partly, the light emitted by the light source, or bulb, (25) in the darkening direction in order to reflect it toward an effective direction of emission.

9. Device as in any claim hereinbefore, **characterized in that** the shutter means (30, 130) externally comprise a retro-reflective portion (32) able to at least partly reflect the incident light coming from outside from a direction coinciding with the darkening direction.

10. Device as in any claim hereinbefore, **characterized in that** the shutter means (30, 130) are associated with different light sources, or bulbs, (25), said different light sources, or bulbs, (25) being able to be activated independently of each other, so as to define a corresponding number of different darkening directions of each light source, or bulb, (25).

11. Device as in any claim hereinbefore, **characterized in that** the light source, or bulb, (25) comprises a plurality of LED elements (25a).

12. Device as in any claim hereinbefore, **characterized in that** it comprises motorization means suitable to selectively drive said shutter means (30, 130) in rotation.

## Patentansprüche

1. Leuchtsignalvorrichtung, umfassend:
- einen kastenartigen Körper, in dem wenigstens eine Lichtquelle (25) oder Glühlampe, die dazu geeignet ist, Licht in jeder Richtung 360° um eine zentrale Achse (X) des kastenartigen Körpers herum abzustrahlen, angeordnet ist, wobei der kastenartige Körper eine untere Abdeckung (12), eine obere Abdeckung (14) und ein Austrittsfenster (20), welches zwischen der oberen Abdeckung (12) und der unteren Abdeckung (14) angeordnet ist, aufweist,
- Verschlussmittel (30, 130), die mit dem Austrittsfenster (20) verknüpft sind, um eine oder mehrere Verdunkelungsrichtungen zu definieren, in denen wenigstens ein Teil des imitierten Lichtes der Lichtquelle (25) oder Glühlampe unterbrochen ist;
**dadurch gekennzeichnet, dass** das Austrittsfenster (20) durch einen im Wesentlichen zylindrischen rohrförmigen Körper gebildet ist, der aus einem transparenten Material geformt ist, der um die zentrale Achse (X) herum ausgebildet ist und dabei die Lichtquelle (25) oder Glühlampe vollständig umgibt und dabei als beinhaltendes und schützendes Element für die Lichtquelle (25) oder Glühlampe fungiert, wobei die Lichtquelle (25) oder Glühlampe von der äußeren Umgebung separiert ist und wobei das Austrittsfenster (20) als lichtlenkendes Element für das von der Lichtquelle (25) oder Glühlampe imitierte Licht dient, wobei die Verschlussmittel (30, 130) entsprechend der Geometrie eines Kreisbogens konfiguriert sind, wobei die Verschlussmittel (30, 130) zumindest teilweise durch ein Teil einer Seitenfläche eines Zylinders definiert sind, der sich über einen Anteil des Kreisumfangs des kastenartigen Körpers, der die Lichtquelle (25) oder Glühlampe enthält, ausdehnt, wobei die Verschlussmittel (30, 130) zwischen der oberen Abdeckung (12) und der unteren Abdeckung (14) eingespannt sind und koaxial zu und außerhalb des Austrittsfensters (20) angeordnet sind, wobei die Verschlussmittel (30, 130) selektiv bewegbar sind in Bezug auf das Austrittsfenster (20), um 360° um die zentrale Achse (X) herum zu rotieren, um die eine oder mehrere Verdunkelungsrichtungen zu definieren, wobei die obere Abdeckung (12) und die untere Abdeckung (14) konzentrisch in Bezug auf die zentrale Achse (X) angeordnet sind, die oberen und unteren ersten Nuten (16a, 16b) radial innen und die oberen und unteren zweiten Nuten (17a, 17b) radial außen angeordnet sind und eine kreisförmige Kontur aufweisen, die passend zu dem Durchmesser des Austrittsfensters (20) und der Verschlussmittel (30, 130) sind, wobei das Austrittsfenster (20) in die oberen und unteren ersten Nuten (16a, 16b) eingesteckt ist, und wobei die Verschlussmittel (30, 130) in den oberen und unteren zweiten Nuten (17a, 17b) zwischen der oberen Abdeckung (12) und der unteren Abdeckung (14) eingesteckt sind und dort, in Bezug auf das Austrittsfenster (20), in Rotation gleitend geführt sind, um selektiv um die zentralen Achse (X) herum zu rotieren.

2. Vorrichtung nach Anspruch 1, **dadurch gekennzeichnet, dass** die oberen und unteren ersten Nuten gegenüberliegende Nuten (16a, 16b) bereitstellen, die respektive an der unteren Abdeckung (14) und der oberen Abdeckung (12) angeordnet sind, und die unteren und oberen zweiten Nuten gegenüberliegende Nuten (17a, 17b) bereitstellen, die respektive an der unteren Abdeckung (14) und der oberen Abdeckung (12) angeordnet sind in einer Position radial außen zu den ersten Nuten (16a, 16b).

3. Vorrichtung nach Anspruch 1 oder 2, **dadurch gekennzeichnet, dass** sie Klemmmittel (13, 27) beinhaltet, die dem kastenartigen Körper zugeordnet sind, um die Verschlussmittel (30, 130) zwischen der oberen Abdeckung (12) und der unteren Abdeckung (14) stabil in einer gewünschten Verdunkelungsposition festzuklemmen.

4. Vorrichtung nach einem der vorhergehenden Ansprüche, **dadurch gekennzeichnet, dass** die untere Abdeckung (14) mit einem Loch (15) versehen ist, zum Einbringen einer rohrförmigen Basis (26), die mit einem zylindrischen Lager der Lichtquelle (25) oder Glühlampe verbunden ist, welches eine Mehrzahl von LED-Leuchtelementen (25a) beinhaltet, die regelmäßig und gleichmäßig in geradlinigen Streifen um das zylindrische Lager herum und koaxial zu der unteren Abdeckung (12) und der Abdeckung (14) angeordnet sind.

5. Vorrichtung nach einem der Ansprüche 3 und 4, **dadurch gekennzeichnet, dass** die Klemmmittel ein lösbares oberes Befestigungsteil (27) beinhalten, das in einer Position entlang der zentralen Achse (X) auf der zylindrischen Tragkonstruktion der Lichtquelle (25) oder Glühlampe vorgesehen ist und dass sie eine relative gemeinsame Aufnahme (13) mit dem oberen Teil (27) beinhalten, die in einer passenden Lage an der oberen Abdeckung (12) vorgesehen ist.

6. Vorrichtung nach einem der vorhergehenden Ansprüche, **dadurch gekennzeichnet, dass** die Verschlussmittel (30, 130) eine Höhe aufweisen, die identisch zu der Höhe des korrespondierenden Austrittsfensters (20) ist.

7. Vorrichtung nach einem der vorhergehenden Ansprüche, **dadurch gekennzeichnet, dass** sie mehrere Verschlussmittel (130) aufweist, die selektiv und unabhängig voneinander bewegbar sind, um eine korrespondierende Anzahl von Verdunkelungsrichtungen der Lichtquelle (25) oder Glühlampe zu definieren.

8. Vorrichtung nach einem der vorhergehenden Ansprüche, **dadurch gekennzeichnet, dass** die Verschlussmittel (30, 130) einen reflektierenden Teil (31) beinhalten, der zumindest auf einem Teil ihrer inneren Oberfläche in Richtung auf die Lichtquelle (25) oder Glühlampe ausgerichtet ist und die geeignet ist, das von der Lichtquelle (25) oder Glühlampe (in der Verdunkelungsrichtung) imitierte Licht zumindest teilweise zurückzugewinnen, um es in eine wirksame Richtung zu reflektieren.

9. Vorrichtung nach einem der vorhergehenden Ansprüche, **dadurch gekennzeichnet, dass** die Verschlussmittel (30, 130) extern einen retro-reflektierenden Teil (32) beinhalten, der geeignet ist, einfallendes Licht, das von außen aus einer Richtung, die mit der Verdunkelungsrichtung übereinstimmt, kommt, zumindest teilweise zu reflektieren.

10. Vorrichtung nach einem der vorhergehenden Ansprüche, **dadurch gekennzeichnet, dass** die Verschlussmittel (30, 130) verschiedenen Lichtquellen (25) oder Glühlampen zugeordnet sind, wobei die verschiedenen Lichtquellen (25) oder Glühlampen dazu geeignet sind, unabhängig voneinander aktiviert zu werden, um eine korrespondierende Anzahl von verschiedenen Verdunkelungsrichtungen jeder Lichtquelle (25) oder Glühlampe zu definieren.

11. Vorrichtung nach einem der vorhergehenden Ansprüche, **dadurch gekennzeichnet, dass** die Lichtquelle (25) oder Glühlampe eine Mehrzahl von LED-Elementen (25a) beinhaltet.

12. Vorrichtung nach einem der vorhergehenden Ansprüche, **dadurch gekennzeichnet, dass** sie Motorisierungsmittel beinhaltet, die geeignet sind, die Verschlussmittel (30, 130) selektiv in Rotation zu versetzen.

## Revendications

1. Dispositif de signalisation lumineuse comprenant :
- un corps en forme de boîte, qui abrite au moins une source de lumière, ou une ampoule, (25) apte à émettre de la lumière de façon uniforme dans toutes les directions à 360° autour d'un axe central (X) du corps en forme de boîte, ledit corps en forme de boîte étant muni d'un couvercle supérieur (12), d'un couvercle inférieur (14) et d'une fenêtre d'émission (20) interposée entre ledit couvercle supérieur (12) et ledit couvercle inférieur (14),
- des moyens d'obturation (30, 130) associés à la fenêtre d'émission (20) afin de définir une ou plusieurs directions d'obscurcissement, au moins une partie de la lumière émise par la source de lumière, ou l'ampoule (25) étant interceptée ; **caractérisé en ce que** ladite fenêtre d'émission (20) est formée par un corps tubulaire sensiblement cylindrique et réalisée en matériau transparent qui se développe autour dudit axe central (X) qui entoure complètement la source de lumière, ou l'ampoule (25) fonctionnant comme un élément de contenant et de protection de la source de lumière, ou de l'ampoule (25), la séparant de l'environnement extérieur, et comme une lentille de direction de lumière pour la lumière émise par la source de lumière, ou l'ampoule (25), et **en ce que** lesdits moyens d'obturation (30, 130) sont configurés selon une géométrie en arc de cercle, défini au moins partiellement par une partie d'une surface latérale d'un cylindre qui se prolonge sur une fraction de la circonférence du corps en forme de boîte contenant la source de lumière, ou l'ampoule (25), les moyens d'obturation (30, 130) étant encastrés entre le couvercle supérieur (12) et le couvercle inférieur (14) et disposés coaxialement à l'extérieur de la fenêtre d'émission (20), lesdits moyens d'obturation (30, 130) étant sélectivement mobiles par rapport à ladite fenêtre d'émission, pour pouvoir tourner à 360° autour dudit axe central (X) de manière à définir ladite une ou plusieurs directions d'obscurcissement, ledit couvercle supérieur (12) et ledit couvercle inférieur (14) comportant, selon une disposition concentrique par rapport à l'axe central (X), des premières rainures supérieures et inférieures (16a, 16b) radialement internes et des secondes rainures supérieures et inférieures (17a, 17b) radialement externes, qui ont un accouplement de forme circulaire respectivement avec le diamètre de la fenêtre d'émission (20) et avec les moyens d'obturation (30, 130), ladite fenêtre d'émission (20) étant insérée dans lesdites premières rainures supérieures et inférieures (16a, 16b) et lesdits moyens d'obturation (30, 130) étant insérés dans lesdites secondes rainures supérieures et inférieures (17a, 17b) entre ledit couvercle supérieur (12) et ledit couvercle inférieur (14) par coulissement et guidés en rotation, par rapport à la fenêtre d'émission (20), afin de pouvoir tourner de manière sélective à 360° autour de l'axe central (X).

2. Dispositif selon la revendication 1, **caractérisé en ce que** lesdites premières rainures supérieures et inférieures forment des rainures opposées (16a, 16b) respectivement sur le couvercle inférieur (14) et le couvercle supérieur (12), et lesdites secondes rainures supérieures et inférieures forment des rainures opposées (17a, 17b) respectivement sur le couvercle inférieur (14) et le couvercle supérieur (12), dans une position radialement externe aux premières rainures (16a, 16b).

3. Dispositif selon la revendication 1 ou 2, **caractérisé en ce qu'**il comprend des moyens de serrage (13, 27) associés au corps en forme de boîte, pour fixer de façon stable les moyens d'obturation (30, 130) entre le couvercle supérieur (12) et le couvercle inférieur (14) dans une position d'assombrissement souhaité.

4. Dispositif selon l'une quelconque des revendications précédentes, **caractérisé en ce que** ledit couvercle inférieur (14) est muni d'un trou (15) en vue de l'insertion d'une base de forme tubulaire (26) reliée à un support cylindrique de la source de lumière, ou une ampoule, (25) comportant une pluralité d'éléments lumineux de type LED (25a), disposés de manière régulière et uniforme selon des bandes linéaires enroulées autour dudit support cylindrique, coaxiaux avec le couvercle supérieur (12) et le couvercle inférieur (14).

5. Dispositif selon la revendication 3 et 4, **caractérisé en ce que** lesdits moyens de serrage comportent une partie supérieure de fixation séparable (27), prévue dans une position alignée le long de l'axe central (X), sur ladite structure de support cylindrique de la source de lumière, ou de l'ampoule (25) et une assise de coopération relative (13) avec la partie supérieure (27) prévue, dans une position d'accouplement, sur le couvercle supérieur (12).

6. Dispositif selon l'une quelconque des revendications précédentes, **caractérisé en ce que** les moyens d'obturation (30, 130) présentent une hauteur identique à celle de la fenêtre d'émission correspondante (20).

7. Dispositif selon l'une quelconque des revendications précédentes, **caractérisé en ce que** il comporte plusieurs desdits moyens d'obturation (130) mobiles de manière sélective et indépendamment les uns par rapport aux autres de manière à définir un nombre correspondant de directions d'assombrissement de la source de lumière, ou de l'ampoule (25).

8. Dispositif selon l'une quelconque des revendications précédentes, **caractérisé en ce que** les moyens d'obturation (30, 130) comportent, au moins sur une partie de leur surface interne, orientée vers ladite source de lumière, ou l'ampoule (25), une partie réfléchissante (31) pouvant récupérer, au moins partiellement, la lumière émise par la source de lumière, ou l'ampoule (25) dans la direction d'assombrissement afin de réfléchir celle-ci vers une direction d'émission efficace.

9. Dispositif selon l'une quelconque des revendications précédentes, **caractérisé en ce que** les moyens d'obturation (30,130) comportent extérieurement une partie rétro-réfléchissante (32) apte à réfléchir au moins partiellement la lumière incidente provenant de l'extérieur à partir d'une direction coïncidant avec la direction d'assombrissement.

10. Dispositif selon l'une quelconque des revendications précédentes, **caractérisé en ce que** les moyens d'obturation (30, 130) sont associés à différentes sources de lumière, ou ampoules (25), lesdites différentes sources de lumière, ou ampoules, (25) pouvant être activées indépendamment les unes des autres, de manière à définir un nombre correspondant de directions différentes d'assombrissement de chaque source de lumière, ou ampoule (25).

11. Dispositif selon l'une quelconque des revendications précédentes, **caractérisé en ce que** la source de lumière, ou ampoule, (25) comprend une pluralité d'éléments LED (25a).

12. Dispositif selon l'une quelconque des revendications précédentes, **caractérisé en ce qu'**il comprend des moyens de motorisation adaptés pour entraîner en rotation de manière sélective lesdits moyens d'obturation (30, 130).
